Europäisches Patentamt

(19) European Patent Office

Office européen des brevets

(11) Numéro de publication: **0 228 310**
**B1**

(12) **FASCICULE DE BREVET EUROPÉEN**

(45) Date de publication du fascicule du brevet:
04.10.89

(21) Numéro de dépôt: **86402379.1**

(22) Date de dépôt: **23.10.86**

�It. Cl.⁴: **F 16 D 13/58,** F 16 D 25/063

(54) **Mécanisme d'embrayage à rondelle Belleville notamment pour véhicule automobile, et embrayage correspondant.**

(30) Priorité: **28.10.85 FR 8515964**

(43) Date de publication de la demande:
**08.07.87 Bulletin 87/28**

(45) Mention de la délivrance du brevet:
**04.10.89 Bulletin 89/40**

(84) Etats contractants désignés:
**DE GB IT**

(56) Documents cité:
**DE-B-1 198 214**
**FR-A-2 311 222**
**GB-A-2 120 329**
**GB-A-2 149 863**

(73) Titulaire: **VALEO, 64 Avenue de la Grande Armée, F-75017 Paris (FR)**

(72) Inventeur: **Huber, Alain, 29 rue des Cascades, F-75020 Paris (FR)**

(74) Mandataire: **CABINET BONNET- THIRION, 95 Boulevard Beaumarchais, F-75003 Paris (FR)**

LIBER, STOCKHOLM 1989

EP 0 228 310 B1

**Description**

La présente invention concerne d'une manière générale les embrayages, et elle vise plus particulièrement les mécanismes d'embrayage, c'est-à-dire l'ensemble des pièces qui, pour la constitution d'un tel embrayage, en particulier pour véhicule automobile, sont à rapporter sur un plateau de réaction, ou volant, avec insertion d'un disque de friction.

Ainsi qu'on le sait, un tel mécanisme d'embrayage comporte, entre autres, une première pièce globalement annulaire, dite couvercle, qui est apte à permettre de rapporter l'ensemble sur un plateau de réaction, ou volant, une deuxième pièce globalement annulaire, dite plateau de pression, qui est montée mobile axialement par rapport au couvercle tout en étant calée en rotation sur celui-ci, et des moyens d'engagement, qui sont aptes à solliciter axialement ledit plateau de réaction dans un sens pour lequel il tend à s'écarter du couvercle, et donc à presser contre ledit plateau de réaction le disque de friction inséré entre lui et ce dernier.

Ces moyens d'engagement, qui permettent l'engagement de l'embrayage, et auxquels il est associé en contre partie des moyens de désengagement permettant le désengagement de celui-ci, sont le plus souvent des moyens élastiques.

Par exemple, il s'agit de moyens élastiques à action axiale comportant au moins une rondelle Belleville.

C'est le cas, notamment, dans le brevet français qui, déposé le 17 Novembre 1978 sous le No 78 32465, a été publié sous le No 2 441 762.

C'est le cas, également, dans les mécanismes d'embrayage à diaphragme, c'est-à-dire dans les mécanismes dans lesquels une troisième pièce globalement annulaire, dite diaphragme, présente une partie périphérique circulamment continue, qui forme précisément rondelle Belleville, et une partie centrale fragmentée en doigts radiaux par des fentes, qui, par lesdits doigts, forme des leviers de débrayage propres à constituer les moyens de désengagement associés et à assurer une progressivité à l'engagement de l'embrayage et à son désengagement.

L'un des avantages d'un tel diaphragme, outre la simplicité de réalisation à laquelle il conduit, est de permettre de bénéficier de la démultiplication due au bras de levier de ses doigts, et, donc, les conditions étant égales par ailleurs, de permettre de réduire la charge à appliquer à l'extrémité de tels doigts pour assurer le désengagement de l'embrayage.

Bien entendu, lorsque les moyens d'engagement sont ainsi formés de moyens élastiques à action axiale, il peut être prévu plus d'une rondelle Belleville, et par exemple au moins deux.

Généralement, ces rondelles Bellevilles sont prévues avec des périphéries internes et externes respectivement sensiblement de même diamètre de l'une à l'autre, et suivant leur disposition dans le mécanisme concerné, elles interviennent en série ou en parallèle.

Dans tous les cas, à ce jour, lorsque les moyens d'engagement comportent ainsi au moins une rondelle Belleville, il y a toujours un décalage radial entre la circonférence suivant laquelle une telle rondelle Belleville trouve axialement un appui et celle suivant laquelle elle déploie ses effets sur le plateau de pression à solliciter en engagement.

Par exemple, par l'une de ses périphéries, elle trouve un appui axial, soit directement, soit indirectement, sur le couvercle, ou sur une quelconque entretoise, en pratique fixe par rapport à celui-ci, tandis que, par l'autre de ses périphéries, elle agit, soit directement, soit indirectement, sur le plateau de pression, et le décalage radial entre les appuis concernés correspond donc à celui existant entre lesdites périphéries.

Si, sans autre, et pour un encombrement radial minimal de l'ensemble, il est mis en oeuvre une rondelle Belleville qui, de même diamètre que le plateau de pression, est globalement superposée à ce dernier, il résulte de ce qui précède que l'effort de cette rondelle Belleville sur le plateau de pression s'exerce suivant une circonférence de diamètre proche de celui de l'une ou l'autre des circonférences délimitant la zone active de ce plateau de pression, c'est-à-dire la zone de celui-ci par laquelle il est destiné à porter axialement sur la garniture de frottement correspondante du disque de friction associé.

Une telle disposition ne peut que conduire à une usure en biais de cette garniture de frottement, au détriment tant d'une bonne utilisation de celle-ci que d'un bon fonctionnement pour l'ensemble.

Pour pallier cet inconvénient, il a donc été proposé de faire en sorte que, au contraire, l'effort de la rondelle Belleville sur le plateau de pression s'exerce suivant une circonférence de diamètre sensiblement milieu entre les diamètres des circonférences délimitant la zone active de celui-ci.

En pratique, la disposition retenue à ce jour pour satisfaire à cette exigence consiste simplement à faire porter la rondelle Belleville sur la zone médiane du plateau de pression, une même disposition étant retenue lorsque deux rondelles Belleville sont mises en oeuvre en série l'une avec l'autre.

Mais, sans autre, cela impose de décaler globalement radialement par rapport au plateau de pression la ou les rondelles Belleville mises en oeuvre.

Si ce décalage radial se fait globalement en direction de l'axe de l'ensemble, il en résulte tant des difficultés d'implantation pour la ou les rondelles Belleville concernées qu'une diminution globale de leurs dimensions, au détriment de la charge qu'elles sont capables de transmettre.

Si, au contraire, ce décalage radial se fait en direction opposée à l'axe de l'ensemble, il en résulte inévitablement une augmentation générale de l'encombrement diamétral de celui-ci, aussi bien qu'une augmentation du bras de levier suivant lequel la ou les rondelles Belleville mises en euvre trouvent axialement un appui sur le couvercle, au risque d'un fléchissement de celui-ci.

C'est pourquoi, le plus souvent, il est proposé de réduire globalement les dimensions de la ou des rondelles Belleville par rapport à celles du plateau de pression, de manière à ce que, malgré un appui axial sur une zone médiane de celui-ci, elles restent globalement dans son contour hors tout.

Mais, s'il peut, du point de vue de l'encombrement diamétral, donner satisfaction, le compromis auquel correspond cette disposition se fait malgré tout au détriment de la charge dont sont capables la ou les rondelles Belleville mises en oeuvre.

En effet, les choses étant égales par ailleurs, cette charge dépend, notamment, du diamètre des circonférences suivant lesquelles se font les appuis de ces rondelles Belleville.

La présente invention a d'une manière générale pour objet une disposition permettant de satisfaire à l'exigence à respecter en matière d'appui sur le plateau de pression sans augmentation de l'encombrement diamétral de l'ensemble.

De manière plus précise, elle a tout d'abord pour objet un mécanisme d'embrayage, notamment pour véhicule automobile, du genre comportant, notamment, une première pièce globalement annulaire, dite couvercle, qui est apte à permettre de rapporter l'ensemble sur un plateau de réaction, ou volant, une deuxième pièce globalement annulaire, dite plateau de pression, qui est montée mobile axialement par rapport au couvercle tout en étant calée en rotation sur celui-ci, et des moyens d'engagement, qui sont aptes à solliciter axialement ledit plateau de pression dans un sens pour lequel il tend à s'écarter du couvercle, lesdits moyens d'engagement étant au moins en partie formés de moyens élastiques à action axiale comportant au moins deux rondelles Belleville, ce mécanisme d'embrayage étant d'une manière générale caractérisé en ce que lesdites rondelles Belleville sont disposées radialement l'une dans l'autre, la périphérie de plus grand diamètre de l'une s'étendant suivant une circonférence de diamètre inférieur à celui de la circonférence suivant laquelle s'étend la périphérie de plus petit diamètre de l'autre, et en ce que, par la périphérie de plus petit diamètre pour l'une, et par celle de plus grand diamètre pour l'autre, les rondelles Belleville portent l'une et l'autre axialement, directement ou indirectement, sur l'une quelconque des pièces globalement annulaires que constituent le couvercle et le plateau de pression, et, par la périphérie de plus grand diamètre pour l'une et par celle de plus petit diamètre pour l'autre, elles portent l'une et l'autre axialement, soit directement, soit indirectement, sur l'autre desdites pièces globalement annulaires;

elle a encore pour objet un embrayage comportant un tel mécanisme d'embrayage.

Suivant la disposition objet de la présente invention, les deux rondelles Belleville mises en oeuvre interviennent en parallèle sur le plateau de pression, indépendamment l'une de l'autre, et il est dès lors aisé de faire en sorte que la résultante de leurs efforts sur ce plateau de pression s'exerce suivant une circonférence de diamètre moyen entre les diamètres des circonférences délimitant la zone active de celui-ci.

Par exemple, l'une de ces rondelles Belleville agit par sa périphérie de plus petit diamètre sur ce plateau de pression, tandis que l'autre agit sur celui-ci par sa périphérie de plus grand diamètre.

La disposition suivant l'invention a encore pour avantage de se conjuguer aisément, si désiré, au cas où les moyens d'engagement élastiques mis en oeuvre comportent un diaphragme.

Par exemple, dans ce cas, les deux rondelles Belleville mises en oeuvre sont disposées de manière à porter axialement sur le couvercle par l'intermédiaire du diaphragme, en fournissant ainsi axialement à celui-ci le deuxième appui qui lui est nécessaire du côté opposé audit couvercle.

Quoi qu'il en soit, en associant ainsi un diaphragme aux deux rondelles Belleville, l'avantage d'une démultiplication de l'effort à fournir pour le désengagement de l'embrayage, tel qu'assuré par les doigts radiaux du diaphragme se trouve conservé.

Certes, il est déjà connu, par la demande de brevet GB-A-2 120 329, de mettre en oeuvre, dans un mécanisme d'embrayage, non pas deux rondelles Belleville, mais un diaphragme et une rondelle Belleville.

Mais, s'agissant, dans cette demande de brevet anglais, de pallier les conséquences de l'ensellement de la courbe de fonctionnement du diaphragme, en abaissant la crête de cette courbe, et non pas d'éviter l'usure en biais de la garniture de frottement du disque de friction, la rondelle Belleville est disposée à côté du diaphragme et porte sur lui, en prenant appui, soit sur le couvercle correspondant, soit sur une pièce solidaire de ce dernier.

A buts différents correspondent donc des moyens différents.

Il est connu par ailleurs des cas où les moyens d'engagement mis en oeuvre sont fluidiques, lesdits moyens d'engagement comportant alors par exemple une chambre de pression à volume variable, qui est formée entre le couvercle et un flasque annulaire formant piston à l'intérieur de celui-ci, et qui est susceptible d'être reliée à une source de fluide sous pression.

C'est le cas par exemple dans le document FR-A-2 583 479.

Dans un tel cas, et c'est le cas précisément dans cette demande de brevet français, il peut être intéressant d'associer au flasque annulaire formant piston au moins une rondelle Belleville propre à agir dans le même sens que lui, les moyens d'engagement mis en oeuvre étant encore ainsi au moins en partie formés de moyens élastiques à action axiale comportant au moins une telle rondelle Belleville.

La disposition suivant l'invention peut également se conjuguer aisément, si désiré, à un tel cas.

Il suffit, en effet, dans ce cas, pour adopter la disposition suivant l'invention, de faire porter sur le plateau de pression, par l'intermédiaire du flasque annulaire formant piston, l'une et l'autre des deux rondelles Belleville mises en oeuvre.

Les caractéristiques et avantages de l'invention ressortiront d'ailleurs de la description qui va suivre, à titre d'exemple, en référence aux dessins schématiques annexés sur lesquels:

la figure 1 est une vue en coupe axiale d'un mécanisme d'embrayage suivant l'invention supposé en place sur le plateau de réaction à équiper, pour la configuration d'engagement de l'embrayage qu'il forme avec celui-ci;

la figure 2 est une vue en perspective, et vue de l'avant, suivant la flèche II de la figure 1, d'un des plots de centrage mis en oeuvre dans ce mécanisme d'embrayage;

la figure 3 est, vu de l'arrière, suivant la flèche III de la figure 2, une autre vue en perspective de ce plot de centrage;

la figure 4 est une vue en coupe axiale partielle reprenant pour partie, à échelle supérieure, et pour le seul mécanisme d'embrayage, celle de la figure 1;

la figure 5 est elle aussi une vue partielle en coupe axiale analogue à celle de la figure 1, mais à l'échelle de la figure 2, pour un autre type d'embrayage.

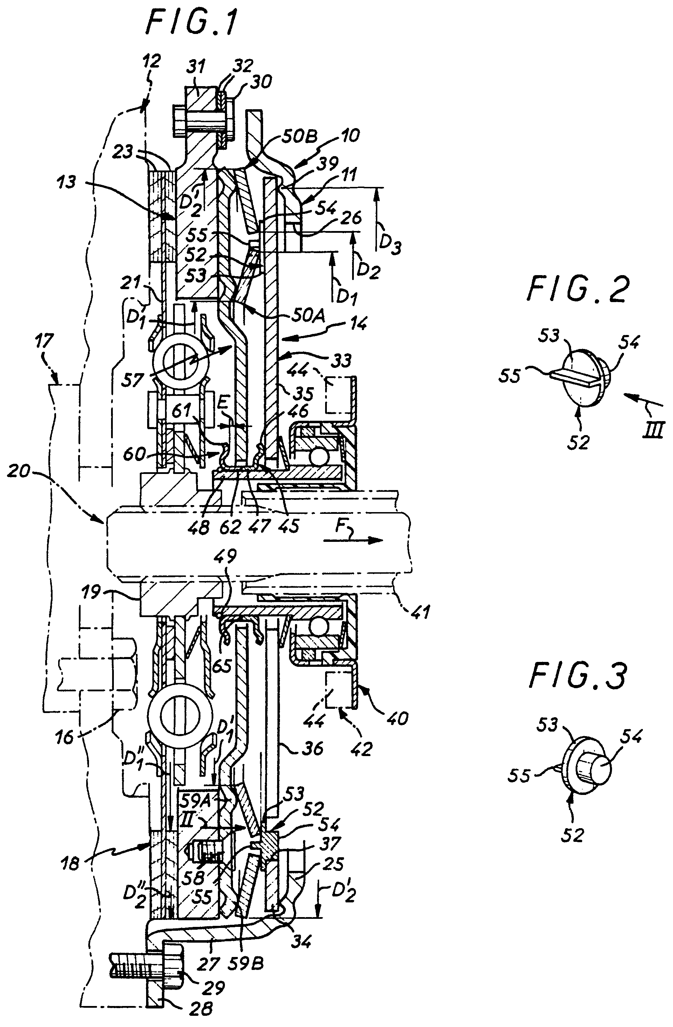

Les figures 1 à 4 illustrent, à titre d'exemple, l'application de l'invention à un mécanisme d'embrayage à diaphragme 10.

Globalement, et de manière connue en soi, un tel mécanisme d'embrayage 10 comporte une première pièce globalement annulaire 11, dite couvercle, qui, pour la constitution d'un embrayage, est apte à permettre de rapporter l'ensemble sur un plateau de réaction 12, une deuxième pièce globalement annulaire 13, dite plateau de pression, qui est mobile axialement par rapport au couvercle tout en étant calée en rotation sur celui-ci, et des moyens d'engagement 14 qui sont aptes à solliciter axialement ledit plateau de pression 13 dans un sens pour lequel il tend à s'écarter du couvercle 11.

Le plateau de réaction 12, ou volant, dont une partie seulement a été schématisée, en traits interrompus, sur la figure 1, ne relève pas de la présente invention, et, bien connu par lui-même, il ne sera pas décrit en détail ici.

Il suffira de rappeler que, par exemple par des vis 16, il est destiné à être rapporté, et donc calé axialement et en rotation, sur un premier arbre 17, en pratique un arbre menant.

De même, le disque de friction 18 à insérer entre le plateau de pression 13 et le plateau de réaction 12 pour la constitution d'un embrayage n'a été que schématisé en traits interrompus à la figure 1, et, ne relevant pas de la présente invention, et bien connu en soi, il ne sera pas décrit en détail ici.

Il suffira de rappeler qu'il comporte un moyeu 19, par lequel il est adapté à être calé en rotation sur un deuxième arbre 20, en pratique un arbre mené, et un voile 21, qui, à sa périphérie, et de part et d'autre, porte, entre le plateau de pression 13 et le plateau de réaction 12, deux garnitures de frottement globalement annulaires 23.

De manière également connue en soi, le couvercle 11 du mécanisme d'embrayage 10 comporte, transversalement, un fond 25, qui est largement ajouré par une ouverture centrale 26, et, axialement, une jupe globalement cylindrique 27, qui enveloppe globalement le plateau de pression 13, au-delà de celui-ci, et qui, à son extrémité opposée au fond 25, forme, radialement, de place en place, en direction opposée à l'axe de l'ensemble, un rebord 28 par lequel l'ensemble peut être rapporté, par exemple par des vis 29, tel que représenté, sur le plateau de réaction 12.

Le plateau de pression 13, quant à lui, présente, radialement en saillie, de place en place, à sa périphérie externe, c'est-à-dire à sa périphérie de plus grand diamètre, des pattes 31 par lesquelles il est solidarisé en rotation au couvercle 11 tout en étant mobile axialement par rapport à celui-ci.

A cet effet, des languettes élastiquement déformables 32, qui, disposées sensiblement transversalement par rapport à l'axe de l'ensemble, en s'étendant tangentiellement par rapport à une circonférence de celui-ci, isolément ou par groupe, tel que représenté, sont fixées à l'une de leurs extrémités, aux pattes 31 du plateau de pression 13, par exemple par des rivets 30, tel que représenté, et, à leur autre extrémité, au couvercle 11, et, plus précisément, à une plage du rebord radial 28 de celui-ci axialement décalée à cet effet par rapport à la partie courante de ce rebord radial 28, ledit rebord radial 28 formant de place en place des auvents à la faveur desquels s'étendent chacune respectivement lesdites pattes 31 du plateau de pression 13.

De manière également connue en soi, les moyens d'engagement 14 comportent, entre le fond 25 du couvercle 11 et le plateau de pression 13, une troisième pièce globalement annulaire 33, dite diaphragme.

Ce diaphragme 33 présente une partie périphérique circulairement continue 34, qui forme rondelle Belleville, et une partie centrale, qui, fragmentée en doigts radiaux 35 par des fentes 36 issues chacune d'un passage 37 formé entre deux de tels doigts radiaux 35, forme, par lesdits doigts radiaux 35, des leviers de débrayage.

Par sa partie périphérique 34, le diaphragme 33 prend axialement appui sur le couvercle 11, et, plus précisément, sur le fond 25 de celui-ci, ledit fond 25 présentant annulairement à cet effet un bourrelet d'appui 39, et, par l'extrémité de ses doigts radiaux 35, il est destiné à être soumis à l'action d'une butée de débrayage 40 propre à la commande en désengagement de l'embrayage.

Une telle butée de débrayage 40 ne relevant pas de la présente invention, elle ne sera pas décrite ici.

Il suffira d'indiquer qu'elle est par exemple montée mobile axialement sur un guide 41, qui, tel que schématisé en traits interrompus à la figure 1, entoure coaxialement l'arbre mené 20, et que, pour son déplacement sur ce guide 41, elle est soumise à un organe de commande 42.

Il s'agit, en pratique, d'une fourchette de débrayage, dont les deux doigts 44 ont été schématisés en traits interrompus à la figure 1.

Dans la forme de réalisation représentée sur les figures 1 à 4, le diaphragme 33 prend axialement appui sur le couvercle 11 suivant une circonférence de diamètre supérieur à celui de la circonférence suivant laquelle, et tel que décrit plus en détail ultérieurement, les moyens d'engagement 14 sont dans leur ensemble aptes à agir axialement sur le plateau de pression 13, et, en conséquence, la butée de débrayage 40 est du type dit "tiré", cette butée de débrayage 40 devant, pour la commande en désengagement de l'embrayage, agir sur le diaphragme 33, et, plus précisément, sur l'extrémité des doigts radiaux 35 de celui-ci, suivant un sens qui, tel que schématisé par la flèche F sur la figure 1, tend à écarter ce diaphragme 33 du plateau de pression 13.

Les dispositions correspondantes étant bien connues par elles-mêmes, il suffira d'indiquer que, aux doigts radiaux 35 du diaphragme 33, il est associé, à cet effet, une pièce d'appui 45, qui est adaptée à porter axialement sur lesdits doigts radiaux 35 du côté de ceux-ci tourné vers le plateau de pression 13, et qui est destinée à être attelée en traction à la butée de débrayage 40.

Il s'agit, en pratique, d'une pièce comportant, transversalement, une coupelle 46, pour son appui axial sur les doigts radiaux 35 du diaphragme 33, et, axialement, une douille 47, pour l'action de la butée de débrayage 40.

Par cette douille 47, la pièce d'appui 45 est engagée sur un élément 48, dit élément d'attaque, appartenant à la butée de débrayage 40, un jonc 49 en prise avec une gorge de cet élément d'attaque 48 étant prévu pour y assurer son maintien axial sur celui-ci.

Ces diverses dispositions étant bien connues par elles-mêmes, elles ne seront pas décrites plus en détail ci-après, sauf en ce qui concerne celles nécessaires à la compréhension de l'invention.

Suivant l'invention, les moyens d'engagement 14 comportant en outre au moins deux rondelles Belleville 50A, 50B, ces deux rondelles Belleville 50A, 50B sont disposées radialement l'une dans l'autre, la périphérie de plus grand diamètre de l'une, celle radialement la plus interne, en l'espèce la rondelle Belleville 50A, s'étendant suivant une circonférence de diamètre D1 inférieur à celui, D2, de la circonférence suivant laquelle s'étend la périphérie de plus petit diamètre de l'autre, celle radialement la plus externe, en l'espèce la rondelle Belleville 50B.

Par la périphérie de plus petit diamètre pour l'une, et par celle de plus grand diamètre pour l'autre, les rondelles Belleville 50A, 50B ainsi mises en oeuvre portent l'une et l'autre axialement, directement ou indirectement, sur l'une quelconque des pièces globalement annulaires que constituent le couvercle 11 et le plateau de pression 13, et, par la périphérie de plus grand diamètre pour l'une et par celle de plus petit diamètre pour l'autre, elles portent l'une et l'autre axialement, soit directement, soit indirectement, sur l'autre desdites pièces globalement annulaires.

Dans la forme de réalisation représentée, c'est indirectement, par l'intermédiaire du diaphragme 33, que les rondelles Belleville 50A, 50B portent axialement sur le couvercle 11, en fournissant ainsi axialement un deuxième appui à ce diaphragme 33, du côté opposé au couvercle 11, sur lequel, tel que précisé ci-dessus, et suivant une circonférence de diamètre D3, il trouve par ailleurs un premier appui.

Il résulte de ce qui précède, que, dans la forme de réalisation représentée, le diamètre D3, qui est celui suivant lequel s'étend annulairement le bourrelet 39 que présente le fond 25 du couvercle 11 pour l'appui axial de la partie périphérique circulairement continue formant rondelle Belleville du diaphragme 33, est supérieur aux deux diamètres D1, D2 précédents.

Corollairement, c'est par leurs périphéries radialement proches l'une de l'autre, à savoir sa périphérie de plus grand diamètre pour la rondelle Belleville 50A et sa périphérie de plus petit diamètre pour la rondelle Belleville 50B, que les deux rondelles Belleville 50A, 50B portent sur le couvercle 11 par l'intermédiaire du diaphragme 33 dans la forme de réalisation représentée.

De préférence, entre les deux rondelles Belleville 50A, 50B et l'une au moins des pièces globalement annulaires 11, 13 entre lesquelles elles agissent sont interposés des moyens de centrage, qui sont convenablement centrés par rapport à ladite pièce globalement annulaire, et qui comportent axialement en saillie, entre lesdites rondelles Belleville, des moyens de calage.

Dans la forme de réalisation représentée, ces moyens de centrage sont associés au diaphragme 33, et ils sont circulairement fractionnés en plots distincts 52.

Chacun de ces plots 52 comporte une plaquette 53, par laquelle il est adapté à porter axialement sur le diaphragme 33, du côté de celui-ci tourné vers le plateau de pression 13, et, en saillie sur cette plaquette 33, d'un premier côté de celle-ci, un embout 54 par lequel il est individuellement engagé dans l'un des passages 37 dudit diaphragme 33.

De l'autre côté de sa plaquette 53, chacun des plots 52 porte axialement en saillie, suivant sensiblement un diamètre de ladite plaquette 53, une nervure 55.

D'un plot 52 à l'autre, cette nervure 55, qui, radialement, s'étend entre les rondelles Belleville 50A, 50B, sensiblement tangentiellement par rapport à celles-ci, forme les moyens de calage prévus pour le centrage de ces rondelles Belleville 50A, 50B.

Par ailleurs, dans la forme de réalisation représentée, et pour des raisons qui apparaîtront ci-après, le plateau de pression 13 est solidaire d'un flasque annulaire d'entraînement 57, et, celui-ci s'étendant globalement transversalement du côté de ce plateau de pression 13 tourné vers le couvercle 11, c'est par l'intermédiaire de ce flasque annulaire d'entraînement 57 que les deux rondelles Belleville 50A, 50B portent l'une et l'autre sur ledit plateau de pression 13.

Par exemple, et tel que représenté, le flasque annulaire d'entraînement 57 est rapporté par des vis 58 sur le plateau de pression 13.

Pour l'appui des rondelles Belleville 50A, 50B, il forme annulairement deux bourrelets 59A, 59B, le premier de diamètre inférieur au diamère D1 précédent et voisin de celui D'1 de la périphérie de plus petit diamètre de la rondelle Belleville 50A, et le deuxième de diamètre supérieur au diamètre D2 précédent et voisin de celui D'2 de la périphérie de plus grand diamètre de la rondelle Belleville 50B.

En pratique, les diamètres D"1, D"2 des circonférences délimitant la zone active du plateau de pression 13, c'est-à-dire la zone de ce plateau de pression 13 par laquelle celui-ci est destiné à porter axialement sur la garniture de frottement 23 correspondante du disque de friction 18, sont eux-mêmes chacun respectivement relativement proches des diamètres D'1, D'2 précédents.

A la manière du diaphragme 33, le flasque annulaire d'entraînement 57 du plateau de pression 13 s'étend radialement en direction de l'axe de l'ensemble, jusqu'au droit des extrémités des doigts radiaux 35 dudit diaphragme 33, et il lui est associé une pièce d'appui 60, qui est adaptée à porter axialement sur ce flasque annulaire d'entraînement 57, du côté de celui-ci tourné vers le plateau de pression 13, et qui est elle aussi destinée à être attelée en traction à la butée de débrayage 40.

Comme la pièce d'appui 45 associée au diaphragme 33, cette pièce d'appui 60 présente, radialement, une coupelle 61, par laquelle elle est adaptée à porter sur le flasque annulaire d'entraînement 57, et, axialement, une douille 62, par laquelle elle est engagée sur l'élément d'attaque 48 de la butée de débrayage 40.

Mais les douilles 47, 62 que présentent ainsi les pièces d'appui 45, 60 sont axialement orientées en sens opposés l'une par rapport à l'autre et elles sont ainsi aptes à venir en butée l'une contre l'autre par leur tranche.

En pratique, la douille 47 de la pièce d'appui 45 est tournée axialement en direction du plateau de pression 13 et la douille 62 de la pièce d'appui 60 est tournée axialement en direction du diaphragme 33, ces douilles 47, 62 se dirigeant l'une vers l'autre à la faveur de l'ouverture centrale 65 du flasque annulaire d'entraînement 57.

En pratique, également, le jonc 49 est en prise avec la pièce d'appui 60, pour le maintien axial de l'ensemble sur l'élément d'attaque 48 de la butée de débrayage 40.

Pour la configuration d'engagement de l'embrayage concerné, et tel que représenté, un jeu E est laissé entre le flasque annulaire d'entraînement 57 du plateau de pression 13 et la coupelle 61 de la pièce d'appui 60 destinée à porter axialement sur celui-ci.

Lorsque, pour une commande en désengagement de l'embrayage, la butée de débrayage 40 est, suivant la flèche F de la figure 1, déplacée axialement par l'organe de commande 42 qui lui est associé, en direction opposée au plateau de pression 13, seul est actionné, dans un premier temps, par la pièce d'appui 45, le diaphragme 33, ce qui soulage d'autant les rondelles Bellevilles 50A, 50B, et, le mouvement axial de la butée de débrayage 40 étant poursuivi, le jeu E entre la pièce d'appui 60 et le flasque annulaire d'entraînement 57 du plateau de pression 13 est absorbé.

Puis, dans un deuxième temps, les pièces en cause étant ainsi en contact, le plateau de pression 13 est entraîné par la butée de débrayage 40, et il est donc écarté du disque de friction 18.

L'embrayage concerné est alors lui-même désengagé.

Lorsque l'action de l'organe de commande 42 sur la butée de débrayage 40 est relâchée, le diaphragme 33 et les rondelles Belleville 50A, 50B reprennent leur configuration initiale, ce qui assure à nouveau le serrage du disque de friction 18 par le plateau de pression 13, et donc l'engagement de l'embrayage.

Par construction, les rondelles Belleville 50A, 50B sont choisies de manière à ce que la résultante de leur effort sur le plateau de pression 13 s'exerce suivant une circonférence de diamètre moyen entre les diamètres D"1, D"2 délimitant la zone active de ce plateau de pression 13, tel que défini ci-dessus.

Une telle disposition est d'abord avantageusement favorable à une usure régulière des garnitures de frottement 23 du disque de friction 18.

En pratique, la charge d'une rondelle Belleville dépendant du diamètre des circonférences suivant lesquelles se font ses appuis, de son épaisseur, de la matière qui la constitue, et de son angle de conicité au repos, les rondelles Belleville 50A, 50B peuvent être choisies de manière à ce que soit ajustée comme désiré la circonférence selon laquelle s'exerce sur le plateau de pression 13 la résultante de leurs efforts.

Par exemple, compte tenu des charges de ces rondelles Belleville, pour que, comme recherché, la résultante de leurs efforts sur le plateau de pression 13 s'exerce suivant une circonférence de diamètre moyen entre les diamètres D"1, D"2 de la zone active de celui-ci, il suffit de choisir en conséquence le diamètre des circonférences suivant lesquelles se font leurs appuis.

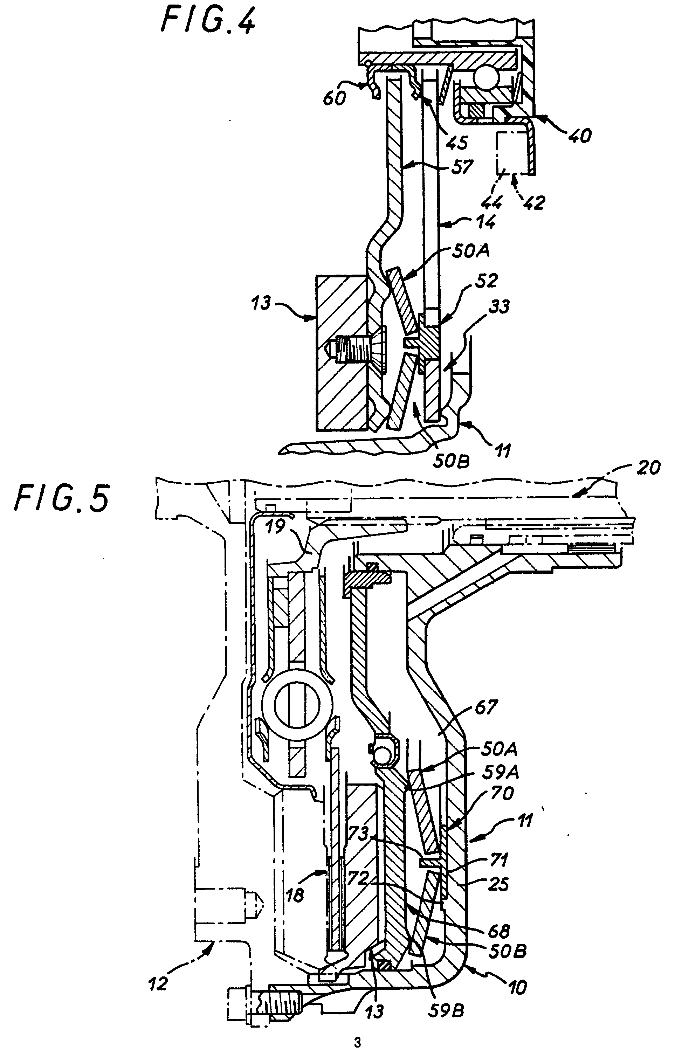

La forme de réalisation illustrée par la figure 5 concerne l'application de l'invention au cas où, tel que décrit en détail dans la demande de brevet français No 8 509 018 mentionnée ci-dessus, les moyens d'engagement 14 comportent une chambre à pression variable 67, qui est formée entre le couvercle 11 et un flasque annulaire 68 formant piston à l'intérieur de ce couvercle 11, et qui est susceptible d'être reliée à une source de fluide sous pression.

Les dispositions correspondantes étant décrites en détail dans le FR-A-2 583 479 en question, elles ne seront pas reprises ici.

Suivant l'invention, deux rondelles Belleville 50A, 50B étant associées au flasque annulaire formant piston 68, et constituant ainsi pour leur part les moyens d'engagement 14 correspondants, ces rondelles Belleville 50A, 50B portent l'une et l'autre sur le plateau de pression 13 par l'intermédiaire dudit flasque annulaire 68 formant piston.

De préférence, et tel que représenté, celui-ci présente annulairement, à cet effet deux bourrelets 59A, 59B.

Dans la forme de réalisation représentée, c'est, comme précédemment, par sa périphérie de plus petit diamètre que la rondelle Belleville radialement la plus interne 50A porte axialement sur le flasque annulaire 68 formant piston, la rondelle Belleville radialement la plus externe 50B portant sur celui-ci par sa périphérie de plus grand diamètre.

Conjointement, les rondelles Belleville 50A, 50B portent axialement sur le couvercle 11, et, plus précisément, sur le fond 25 de celui-ci, et, entre elles et ce fond 25 sont interposés des moyens de centrage formant globalement un anneau circulairement continu 70.

Dans la forme de réalisation représentée, cet anneau 70 comporte une semelle 71, qui s'étend globalement transversalement, et qui, par sa périphérie de plus grand diamètre, est elle-même centrée sur une nervure 72 prévue axialement en saillie à cet effet, sur la face interne du fond 25 du couvercle 11.

Axialement, l'anneau formant les moyens de centrage en question présente en saillie une nervure 73, qui, insérée entre les rondelles Belleville 50A, 50B, assure le centrage de celles-ci.

Bien entendu, la présente invention ne se limite pas aux formes de réalisation et d'application représentées, mais englobe toute variante d'exécution.

En particulier, lorsque, comme plus particulièrement décrit et représenté, le plateau de pression est solidaire d'un flasque annulaire d'entraînement, il peut être, si désiré, prévu une couche isolante entre un tel plateau de pression et ce flasque annulaire d'entrainement.

**Revendications**

1. Mécanisme d'embrayage, notamment pour véhicule automobile, du genre comportant, notamment, une première pièce globalement annulaire (11), dite couvercle, qui est apte à permettre de rapporter l'ensemble sur un plateau de réaction (12), ou volant, une deuxième pièce globalement annulaire (13), dite plateau de pression, qui est montée mobile axialement par rapport au couvercle (11) tout en étant calée en rotation sur celui-ci, et des moyens d'engagement (14), qui sont aptes à solliciter axialement ledit plateau de pression (13) dans un sens pour lequel il tend à s'écarter du couvercle (11), lesdits moyens d'engagement (14) étant au moins en partie formés de moyens élastiques à action axiale comportant au moins deux rondelles Belleville (50A, 50B), caractérisé en ce que lesdites rondelles Belleville (50A, 50B) sont disposées radialement l'une dans l'autre, la périphérie de plus grand diamètre de l'une s'étendant suivant une circonférence de diamètre (D1) inférieur à celui (D2) de la circonférence suivant laquelle s'étend la périphérie de plus petit diamètre de l'autre, et en ce que, par la périphérie de plus petit diamètre pour l'une, et par celle de plus grand diamètre pour l'autre, les rondelles Belleville (50A, 50B) portent l'une et l'autre axialement, directement ou indirectement, sur l'une quelconque des pièces globalement annulaires que constituent le couvercle (11) et le plateau de pression (13), et, par la périphérie de plus grand diamètre pour l'une et par celle de plus petit diamètre pour l'autre, elles portent l'une et l'autre axialement, soit directement, soit indirectement, sur l'autre desdites pièces globalement annulaires (11, 13).

2. Mécanisme d'embrayage suivant la revendication 1, caractérisé en ce que, par la périphérie de plus petit diamètre pour l'une, et par celle de plus grand diamètre pour l'autre, les rondelles Belleville (50A, 50B) portent l'une et l'autre axialement, directement ou indirectement, sur l'une quelconque des pièces globalement annulaires que constituent le couvercle (11) et le plateau de pression (13), et, par la périphérie de plus grand diamètre pour l'une et par celle de plus petit diamètre pour l'autre, elles portent l'une et l'autre axialement, soit directement, soit indirectement, sur l'autre desdites pièces globalement annulaires (11, 13).

3. Mécanisme d'embrayage suivant la revendication 2, caractérisé en ce que, entre les deux rondelles Belleville (50A, 50B) et l'une au moins des pièces globalement annulaires (11, 13) entre lesquelles elles agissent sont interposés des moyens de centrage, qui sont convenablement centrés par rapport à ladite pièce globalement annulaire (11, 13), et qui comportent axialement en saillie, entre lesdites rondelles Belleville, des moyens de calage (55, 73).

4. Mécanisme d'embrayage suivant la revendication 3, caractérisé en ce que lesdits moyens de centrage sont circulairement fractionnés en plots distincts (52).

5. Mécanisme d'embrayage suivant la revendication 3, caractérisé en ce que lesdits moyens de centrage forment globalement un anneau circulairement continu (70).

6. Mécanisme d'embrayage suivant l'une quelconque des revendications 1 à 5, caractérisé en ce que les moyens d'engagement comportant une troisième pièce globalement annulaire (33), dite diaphragme, qui présente une partie périphérique circulairement continue (34), formant rondelle Belleville, et une partie centrale fragmentée en doigts radiaux (35) par des fentes (36) issues chacune d'un passage (37) formé entre deux de tels doigts radiaux (35), et qui, par sa dite partie périphérique (34), prend axialement appui sur le couvercle (11), les deux rondelles Belleville (50A, 50B) portent axialement sur ledit couvercle (11) par l'intermédiaire dudit diaphragme (33) et fournissent ainsi axialement un deuxième appui à celui-ci.

7. Mécanisme d'embrayage suivant la revendication 6, caractérisé en ce que c'est par leurs périphéries radialement proches l'une de l'autre, à savoir une périphérie de plus grand diamètre pour l'une et une périphérie de plus petit diamètre pour l'autre, que les deux rondelles Belleville (50A, 50B) portent sur le couvercle (11) par l'intermédiaire du diaphragme (33).

8. Mécanisme d'embrayage suivant les revendications 4 et 7, prises conjointement, caractérisé en ce que les plots (52) formant les moyens de centrage comportent chacun un embout (54) par lequel ils sont chacun individuellement engagés dans des passages (37) du diaphragme (33).

9. Mécanisme d'embrayage suivant la revendication 6, caractérisé en ce que, s'agissant d'un mécanisme d'embrayage de type "tiré", c'est-à-dire d'un mécanisme d'embrayage dans lequel il est associé aux doigts radiaux (35) du diaphragme (33) une pièce d'appui (45), qui est adaptée à porter axialement sur lesdits doigts radiaux (35) du côté de ceux-ci tourné vers le plateau de pression (13), et qui est destinée à être attelée en traction à une butée de débrayage (40), ledit plateau de pression (13) est solidaire d'un flasque annulaire d'entraînement (57) et il est associé à celui-ci une pièce d'appui (60), qui est adaptée à porter axialement sur ce flasque annulaire d'entraînement (57) du côté de celui-ci tourné vers le plateau de pression (13), et qui est elle aussi destinée à être attelée en traction à la butée de débrayage (40).

10. Mécanisme d'embrayage suivant la revendication 9, caractérisé en ce que, les deux pièces d'appui (45, 60) comportant chacune axialement une douille (47, 62), leurs douilles (47, 62) sont axialement orientées en sens opposés l'une par rapport à l'autre et sont aptes à venir en butée l'une contre l'autre par leur tranche.

11. Mécanisme d'embrayage suivant l'une quelconque des revendications 9, 10, caractérisé en ce que les deux rondelles Belleville (50A, 50B) portent l'une et l'autre sur le plateau de pression (13) par l'intermédiaire de son flasque annulaire d'entraînement (57).

12. Mécanisme d'embrayage suivant l'une quelconque des revendications 1 à 3 et 6, caractérisé en ce que, les moyens d'engagement (14) comportant une chambre de pression à volume variable (67), qui est formée entre le couvercle (11) et un flasque annulaire (68) formant piston à l'intérieur de celui-ci, et qui est susceptible d'être reliée à une source de fluide sous pression, les deux rondelles Belleville (50A, 50B) portent l'une et l'autre sur le plateau de pression (13) par l'intermédiaire dudit flasque annulaire formant piston (68).

13. Mécanisme d'embrayage suivant l'une quelconque des revendications 1 à 12, caractérisé en ce que les rondelles Belleville (50A, 50B) sont choisies de manière à ce que la résultante de leurs efforts sur le plateau de pression (13) s'exerce suivant une circonférence de diamètre moyen entre les diamètres (D"1, D"2) des circonférences délimitant la zone active de ce plateau de pression (13), c'est-à-dire la zone de celui-ci par laquelle il est destiné à porter axialement sur la garniture de frottement (23) correspondante d'un disque de friction (18).

14. Embrayage, du genre comportant un mécanisme d'embrayage (10) rapporté sur un plateau de réaction (12) avec insertion d'un disque de friction (18), caractérisé en ce que ledit mécanisme d'embrayage (10) est conforme à l'une quelconque des revendications 1 à 13.

15. Embrayage suivant la revendication 14, caractérisé en ce que son désengagement se fait en deux temps, à savoir un premier temps au cours duquel les rondelles Belleville (50A, 50B) de son mécanisme d'embrayage (10) sont soulagées, et un deuxième temps au cours duquel son plateau de pression (13) est écarté du disque de friction (18).

16. Embrayage suivant la revendication 15, caractérisé en ce que, son mécanisme d'embrayage (10) étant conforme à la revendication 9, il est prévu, pour sa configuration d'engagement, un jeu (E) entre le flasque annulaire d'entraînement (57) de son plateau de pression (13) et la pièce d'appui (60) destinée à porter axialement sur celui-ci.

17. Mécanisme d'embrayage suivant l'une quelconque des revendications 1 à 16, caractérisé en ce que les rondelles Belleville (50A, 50B) sont choisies de manière à ce que la résultante de leur effort sur le plateau de pression (13) s'exerce suivant une circonférence de diamètre moyen entre les diamètres (D"1, D"2) délimitant la zone active de ce plateau de pression (13).

**Patentansprüche**

1. Kupplungsmechanismus, insbesondere für Kraftfahrzeuge, von der Art, die insbesondere ein erstes im wesentlichen ringförmiges Stück (11), den sogenannten Deckel, enthält, welches geeignet ist, die Einheit an einer Gegendruckplatte (12) oder einem Schwungrad anzubringen, einem zweiten im wesentlichen ringförmigen Stück (13), der sogenannten Druckplatte, welches im Verhältnis zum Deckel (11) längsverschiebbar angebracht und drehbar darauf verkeilt ist, sowie Eingriffsmittel (14), die geeignet sind, die genannte Druckplatte (13) in einer Richtung, wobei eine Tendenz zur Entfernung vom Deckel (11) besteht, axial zu beanspruchen, wobei die genannten Eingriffsmittel (14) wenigstens teilweise aus axial wirksamen elastischen Mitteln bestehen, die wenigstens zwei Tellerfedern (50A, 50B) enthalten, dadurch gekennzeichnet, daß die genannten Tellerfedern (50A, 50B) radial ineinander angeordnet sind, wobei sich die Peripherie mit dem größeren Durchmesser der einen Tellerfeder längs eines Umfangs erstreckt, dessen Durchmesser (D1) kleiner ist als derjenige (D2) des Umfangs, an dem entlang sich die Peripherie mit dem kleineren Durchmesser erstreckt, und daß die Tellerfedern (50A, 50B) mit der Peripherie von kleinerem Durchmesser einerseits und mit der Peripherie von größerem Durchmesser andererseits jeweils axial direkt oder indirekt auf einem beliebigen der im wesentlichen ringförmigen Stücke aufliegen, die von dem Deckel (11) und der Druckscheibe (13) gebildet werden, und daß sie mit der Peripherie von größerem Durchmesser einerseits bzw. mit der Peripherie von geringerem Durchmesser andererseits jeweils axial entweder direkt oder indirekt auf dem jeweils anderen der genannten im wesentlichen ringförmigen Stücke aufliegen (11, 13).

2. Kupplungsmechanismus nach Anspruch 1, dadurch gekennzeichnet, daß die Tellerfedern (50A, 50B) mit der Peripherie von geringerem Durchmesser einerseits und mit der Peripherie von größerem Durchmesser andererseits jeweils axial direkt oder indirekt auf einem beliebigen der im wesentlichen ringförmigen Stücke aufliegen, die aus dem Deckel (11) und der Druckplatte (13) gebildet werden, und mit der Peripherie von größerem Durchmesser einerseits und der Peripherie von geringerem Durchmesser andererseits jeweils axial direkt oder indirekt auf dem anderen der genannten im wesentlichen ringförmigen Stücke (11, 13) aufliegen.

3. Kupplungsmechanismus nach Anspruch 2, dadurch gekennzeichnet, daß zwischen den beiden Tellerfedern (50A, 50B) und wenigstens einem der im wesentlichen ringförmigen Stücke (11, 13), zwischen denen diese wirksam werden, Zentriermittel eingefügt sind, die im Verhältnis zum genannten im wesentlichen ringförmigen Stück (11, 13) auf geeignete Weise zentriert sind und die zwischen den genannten Tellerfedern axial vorspringend Verkeilungsmittel (55, 73) enthalten.

4. Kupplungsmechanismus nach Anspruch 3, dadurch gekennzeichnet, daß die genannten Zentriermittel rundherum in verschiedene Stufen (52) unterteilt sind.

5. Kupplungsmechanismus nach Anspruch 3, dadurch gekennzeichnet, daß die genannten Zentriermittel im wesentlichen einen kreisförmig durchlaufenden Ring (70) bilden.

6. Kupplungsmechanismus nach einem der Ansprüche 1 bis 5, dadurch gekennzeichnet, daß die Eingriffsmittel ein drittes, im wesentlichen ringförmiges Stück (33), die sogenannte Membran, enthalten, welches einen rundherum durchlaufenden peripheren Teil (34) aufweist, der die Tellerfeder bildet, und einen zentralen Teil, der durch Schlitze (36), die jeweils von einem zwischen zwei dieser radialen Finger (35) gebildeten Durchtritt (37) ausgehen, in radiale Finger (35) unterteilt ist und die mit der Peripherie (34) axial auf dem Deckel (11) aufliegt, während die beiden Tellerfedern (50A, 50B) mit Hilfe der genannten Membran (33) axial auf dem genannten Deckel (11) aufliegen und somit eine zweite axiale Abstützung dafür bilden.

7. Kupplungsmechanismus nach Anspruch 6, dadurch gekennzeichnet, daß die beiden Tellerfedern (50A, 50B) mit den radial beieinanderliegenden Peripherien, d. h. einer Peripherie von größerem Durchmesser einerseits und einer Peripherie von geringerem Durchmesser andererseits, mittels der Membran (33) auf dem Deckel (11) aufliegen.

8. Kupplungsmechanismus nach den Ansprüchen 4 und 7 zusammengenommen, dadurch gekennzeichnet, daß die Stufen (52), die die Zentriermittel bilden, jeweils einen Ansatz (54) aufweisen, mit dem sie jeweils einzeln in Durchtritte (37) der Membran (33) eingreifen.

9. Kupplungsmechanismus nach Anspruch 6, dadurch gekennzeichnet, daß, da es sich um einen Kupplungsmechanismus in "Zugausführung" handelt, d. h. einen Kupplungsmechanismus, bei dem den radialen Fingern (35) der Membran (33) ein Auflagestück (45) zugeordnet ist, welches axial auf den genannten radialen Fingern (35) auf der der Druckplatte (13) zugewandten Seite derselben aufliegen kann und welches mittels Zugwirkung an ein Kupplungsausrücklager (40) angekoppelt werden kann, die genannte Druckplatte (13) fest mit einem ringförmigen Mitnehmerflansch (57) verbunden und diesem ein Auflagestück (60) zugeordnet ist, welches axial auf diesem ringförmigen Mitnehmerflansch (57) auf der der Druckplatte (13) zugewandten Seite desselben aufliegen kann, wobei dieses Stück wiederum dazu bestimmt ist, mittels Zugwirkung an das Kupplungsausrücklager (40) angekoppelt zu werden.

10. Kupplungsmechanismus nach Anspruch 9, dadurch gekennzeichnet, daß die beiden Auflagestücke (45, 60) jeweils axial eine Hülse (47, 62) aufweisen, daß die Hülsen (47, 62) axial einander entgegengesetzt ausgerichtet und dazu geeignet sind, mit ihrem Rand gegeneinander zu stoßen.

11. Kupplungsmechanismus nach einem der Ansprüche 9, 10, dadurch gekennzeichnet, daß die beiden Tellerfedern (50A, 50B) mittels ihres ringförmigen Mitnehmerflanschs (57) jeweils auf der Druckplatte (13) aufliegen.

12. Kupplungsmechanismus nach einem der Ansprüche 1 bis 3 und 6, dadurch gekennzeichnet, daß die Eingriffsmittel (14) über eine Druckkammer mit veränderlichem Volumen (67) verfügen, welche zwischen dem Deckel (11) und einem ringförmigen Flansch (68) ausgebildet ist, wobei der Flansch im Innern des Deckels einen Kolben bildet, und die an eine Druckflüssigkeitsquelle angeschlossen werden kann, während die beiden Tellerfedern (50A, 50B) mittels des genannten ringförmigen Flanschs, der als Kolben wirkt (68), jeweils auf der Druckplatte (13) aufliegen.

13. Kupplungsmechanismus nach einem der Ansprüche 1 bis 12, dadurch gekennzeichnet, daß die Tellerfedern (50A, 50B) so gewählt sind, daß die Resultierende aus ihren Beanspruchungen an der Druckplatte (13) entlang einem Umfang mittleren Durchmessers zwischen den Durchmessern (D"1, D"2) der Umfänge ausgeübt wird, die die aktive Zone dieser Druckplatte (13) begrenzen, d. h. den Bereich der Druckplatte, womit diese axial auf dem entsprechenden Reibbelag (23) einer Kupplungsscheibe (18) aufliegen soll.

14. Kupplung von der Art, die einen Kupplungsmechanismus (10) enthält, der an einer Gegendruckplatte (12) unter Einfügung einer Kupplungsscheibe (18) angebracht ist, dadurch gekennzeichnet, daß der genannte Kupplungsmechanismus (10) einem der Ansprüche 1 bis 13 entspricht.

15. Kupplung nach Anspruch 14, dadurch gekennzeichnet, daß deren Ausrückung in zwei Phasen erfolgt, nämlich in einer ersten Phase, während welcher die Tellerfedern (50A, 50B) des Kupplungsmechanismus (10) entlastet werden, und einer zweiten Phase, in deren Verlauf sich die Druckplatte (13) von der Kupplungsscheibe (18) entfernt.

16. Kupplung nach Anspruch 15, dadurch gekennzeichnet, daß, nachdem der Kupplungsmechanismus (10) dem Anspruch 9 entspricht, für die Eingriffskonfiguration ein Spiel (E) zwischen dem ringförmigen Mitnehmerflansch (57) der Druckplatte (13) und dem Auflagestück (60), welches axial darauf aufliegen soll, vorgesehen ist.

17. Kupplungsmechanismus nach einem der Ansprüche 1 bis 16, dadurch gekennzeichnet, daß die Tellerfedern (50A, 50B) so gewählt sind, daß die Resultierende ihrer auf die Druckplatte (13) ausgeübten Betätigungskraft entlang eines Umfangs mittleren Durchmessers zwischen den Durchmessern (D"1, D"2) ausgeübt wird, die die aktive Zone dieser Druckplatte (13) begrenzen.

## Claims

1. Clutch cover assembly, especially for automobile vehicles, of the kind comprising, in particular, a substantially annular first piece (11), called the cover, which is adapted to enable the said assembly to be attached to a reaction plate (12), or flywheel, a substantially annular second piece (13), called the pressure plate, which is mounted axially movable relative to the cover (11) but is constrained to rotate with the latter, and engagement means (14) adapted to urge the said pressure plate (13) in the axial direction in which it tends to move away from the cover (11), the said engagement means (14) being formed at least in part from axially acting spring means comprising at least two Belleville washers (50A, 50B), characterized in that the said Belleville washers (50A, 50B) are disposed radially one inside the other, the periphery of larger diameter of one of them having a circumference of diameter (D1) which is smaller than the diameter (D2) of the circumference of the periphery of smaller diameter of the other one, and in that the Belleville washers (50A, 50B) both bear in the axial direction, directly or indirectly, by the periphery of smaller diameter of the one and that of larger diameter of the other, on either one of the substantially annular pieces which the cover (11) and the pressure plate (13) constitute, and they bear in the axial direction, directly or indirectly, by the periphery of larger diameter of the one and by that of smaller diameter of the other respectively, on the other of the said substantially annular pieces (11, 13).

2. Clutch cover assembly according to claim 1, characterized in that the Belleville washers (50A, 50B) both bear in the axial direction, directly or indirectly, by the periphery of smaller diameter of the one and that of larger diameter of the other, on either one of the substantially annular pieces which the cover (11) and the pressure plate (13) constitute, and by the periphery of larger diameter of the one and by that of smaller diameter of the other, respectively, they bear in the axial direction, directly or indirectly, on the other of the said substantially annular pieces (11, 13).

3. Clutch cover assembly according to claim 2, characterized in that between the two Belleville washers (50A, 50B) and at least one of the substantially annular pieces (11, 13) between which they act, centering means are interposed which are suitably centered relative to the said substantially annular piece (11, 13), and which comprise axially projecting keying means (55, 73) between the said Belleville washers.

4. Clutch cover assembly according to claim 3, characterized in that the said centering means are circularly divided into individual studs (52).

5. Clutch cover assembly according to claim 3, characterized in that the said centering means form a ring (70) which is substantially continuous in the circumferential direction.

6. Clutch cover assembly according to any one of claims 1 to 5, characterized in that the said engagement means comprise a third substantially annular piece (33), called a diaphragm spring, which has a circumferentially continuous peripheral part (34) which forms a Belleville washer, and a central part subdivided into radial fingers (35) by slots (36) each of which originate from an opening (37) formed between two such radial fingers (35), and which by means of its said peripheral part (34) bears axially on the cover (11), and the two Belleville washers (50A, 50B) bear axially on the said cover (11) through the intermediary of the said diaphragm spring (33) for which they thereby constitute a second means of axial support.

7. Clutch cover assembly according to claim 6, characterized in that by means of their peripheries which are radially close to one another, namely the periphery of larger diameter in the case of one of them and the periphery of smaller diameter in the case of the other, the two Belleville washers (50A, 50B) bear on the cover (11) through the intermediary of the diaphragm spring (33).

8. Clutch cover assembly according to claims 4 and 7 taken together, characterized in that the studs (52) which form the centering means each comprise a termination (54) by means of which they are each individually engaged in openings (37) in the diaphragm spring (33).

9. Clutch cover assembly according to claim 6, characterized in that, it being a clutch assembly of the "pulled" type, that is to say a clutch assembly in which a bearing part (45) is associated with the radial fingers (35) of the diaphragm spring (33) and is adapted to bear axially on the side of the said radial fingers (35) facing the pressure plate (13), and which is adapted to be coupled in traction to a clutch release bearing (40), the said pressure plate (13) is fixed to an annular drive flange (57), and a bearing part (60) associated with the latter is adapted to bear axially on the side of the annular drive flange (57) facing the pressure plate (13), and it too is adapted to be coupled in traction to the clutch release bearing (40).

10. Clutch cover assembly according to claim 9, characterized in that, the two bearing parts (45, 60) each comprise an axial bush (47, 62) and their bushes (47, 62) are orientated in opposite axial directions to one another and are adapted to abut against each other through their edges.

11. Clutch cover assembly according to any one of claims 9 or 10, characterized in that each of the two Belleville washers (50A, 50B) bears on the pressure plate (13) through the intermediary of its annular drive flange (57).

12. Clutch cover assembly according to any one of claims 1 and 3 to 6, characterized in that the engagement means (14) comprise a variable volume pressure chamber (67) which is formed between the cover (11) and an annular flange (68) which forms a piston inside the cover, and which can be connected to a source of pressurized fluid, and the two Belleville washers (50A, 50B) both bear on the pressure plate (13) through the intermediary of the said annular flange which forms a piston (68).

13. Clutch cover assembly according to any one of claims 1 to 12, characterized in that the Belleville washers (50A, 50B) are chosen to be such that they exert a resultant force on the pressure plate (13) on a circumference the diameter of which is intermediate between the diameters ($D''1$, $D''2$) of the circumferences delimiting the active zone of the pressure plate (13), that is to say the zone of the latter through which it is adapted to bear axially on the corresponding friction facing (23) of a friction disc (18).

14. Clutch, of the kind comprising a clutch cover assembly (10) attached to a reaction plate (12) with a friction disc (18) inserted between them, characterized in that the said clutch cover assembly (10) is in accordance with any one of claims 1 to 13.

15. Clutch according to claim 14, characterized in that its disengagement occurs in two stages, namely a first stage during which the load is taken off the Belleville washers (50A, 50B) of its clutch cover assembly (10), and a second stage during which its pressure plate (13) is moved away from the friction disc (18).

16. Clutch according to claim 15, characterized in that its clutch cover assembly (10) is in accordance with claim 9 and a clearance (E) is provided, in its engaged configuration, between the annular drive flange (57) of its pressure plate (13) and the bearing part (60) which is adapted to bear axially on the pressure plate.

17. Clutch according to any one of claims 1 to 16, characterized in that the Belleville washers (50A, 50B) are chosen to be such that they exert a resultant force on the pressure plate (13) on a circumference the diameter of which is intermediate between the diameters ($D''1$, $D''2$) delimiting the active zone of the pressure plate (13).

FIG.1

FIG.2

FIG.3

FIG.4

FIG.5